# EUROPEAN PATENT APPLICATION

(11) **EP 4 825 516 A1**
(43) Date of publication of application: **21.10.2026**
(21) Application number: 24904107.0
(22) Date of filing: 29.11.2024
(51) Int. Cl.: B23K 9/02, B23K 9/16, B23K 9/18, B23K 101/18

(54) **THICK STEEL PLATE HAVING HEAVY UNIT WEIGHT AND FABRICATION METHOD THEREOF**

(30) Priority: 15.12.2023 KR 20230182795
(71) Applicant: POSCO Co., Ltd, Gyeongsangbuk-do 37859 (KR)
(72) Inventor: CHAE, Hyun-Byung, Pohang-si, Gyeongsangbuk-do 37877 (KR); BAE, Hong-Yeol, Pohang-si, Gyeongsangbuk-do 37877 (KR); LEE, Jin-Woo, Pohang-si, Gyeongsangbuk-do 37877 (KR)
(74) Representative: Meissner Bolte Partnerschaft mbB
(86) International application number: PCT/KR2024/019278
(87) International publication number: WO 2025/127542

(57) **Abstract**

The present invention relates to a method for manufacturing a thick steel plate having a heavy unit weight, wherein the thick steel plate has a unit weight of 30 tons or more and can be formed into a shape forming at least part of a desired structure. The method comprises the steps of: s1) using at least two thick steel plates that each have a unit weight of 25 tons or less and a thickness (t0) of 60 mm or more and have a grooved end, and arranging the steel plates so that the grooved ends face each other, thereby forming a joint having a groove; s2) performing tack welding to fix the joint; s3) performing first arc welding along the groove; s4) forming a back-surface groove, along the joint, on a back surface opposite a front surface, which is the surface on which the first arc welding was performed; and s5) performing secondary arc welding along the back-surface groove.

## Description

### Technical Field

The present disclosure relates to a thick steel plate having a heavy unit weight and a fabrication method thereof.

### Background Art

Due to factors such as carbon neutrality, the RE100 initiative, and the carbon border adjustment mechanism (CBAM), demand for the construction of renewable energy facilities, particularly offshore wind power, is expected to steadily increase over the next 20 years. In order to improve the economic feasibility of offshore wind power, it is important to increase the power generation per unit of wind turbine. To this end, wind turbine capacities have recently been increased in size, and accordingly, blade lengths have increased, and towers supporting the turbines and blades have also become larger.

In order to install wind power towers offshore, fixed structures are generally erected on the seabed, and the monopile, which is the most widely used structure, is also becoming larger as the weight of the upper portion of the monopile increases.

Currently, it is common to manufacture one monopile can using two thick steel plates. However, as turbine capacity is expected to rapidly increase to the 25 MW class by 2030, the number of thick steel plates used to manufacture a single monopile can is expected to increase to as many as six.

When a thick steel plate having a heavy unit weight is used, compared to a thick steel plate having a small unit weight, there are advantages in that weld seams may be reduced during can manufacturing, production speed may be increased, and monopile production costs may be lowered. More importantly, when a thick steel plate having a heavy unit weight is used, the overall project duration may be reduced, thereby significantly lowering costs in terms of overall capital expenditure (Capex). For these reasons, from the perspective of wind power developers, thick steel plates having a heavy unit weight are inevitably preferred, and major domestic and international steel plate manufacturers are in a situation where facility upgrades are being carried out through large-scale investments to enable the production of thick steel plates having a heavy unit weight.

### Summary of Invention

### Technical Problem

An aspect of the present disclosure is to provide a method for easily manufacturing a thick steel plate having a heavy unit weight of 30 tons or more.

Another aspect of the present disclosure is to provide a fabrication method of a thick steel plate having a heavy unit weight, which can easily manufacture thick steel plates having various unit weights.

Still another aspect of the present disclosure is to provide a fabrication method of a thick steel plate having a heavy unit weight, which has excellent low-temperature impact toughness.

The problem of the present disclosure is not limited to the above. Those skilled in the art to which the present disclosure pertains will have no difficulty in understanding the additional objects of the present disclosure from the contents throughout the present specification.

### Solution to Problem

According to an aspect of the present disclosure, a fabrication method of a thick steel plate having a heavy unit weight, in which the thick steel plate has a unit weight of 30 tons or more and is to be formed into a shape forming at least part of a desired structure, includes: S1) using at least two thick steel plates that each have a unit weight of 25 tons or less and a thickness t0 of 60 mm or more and have a grooved end, and arranging the thick steel plates so that the grooved ends face each other, thereby forming a joint having a groove; S2) performing tack welding to fix the joint; S3) performing first arc welding along the groove; S4) forming a back-surface groove, along the joint, on a back surface opposite a front surface, which is a surface on which the first arc welding is performed; and S5) performing second arc welding along the back-surface groove.

A weld bead generated by the first arc welding may be exposed to a bottom surface of the back-surface groove formed in S4).

The groove of S1) may be the front-surface groove, and the back-surface groove formed in S4) may satisfy Expressions 1 and 2.$D 1 + D 2 > t 0$ (Expresson 1) $0.05 t 0 \leq \left|D1+D2-t0\right| \leq 0.25 t 0$ (Expresson 2)

In Expressions 1 and 2, D1 denotes a groove depth of the front-surface groove, and D2 denotes a groove depth of the back-surface groove.

The groove depth (D1) of the front-surface groove may range from 0.55 t0 to 0.80 t0.

The groove of S1) may be a front-surface groove, the front-surface groove may be U-shaped or V-shaped, and the back-surface groove may be U-shaped.

An opening width (W1)/groove depth (D1) of the front-surface groove may range from 0.4 to 0.7.

A ratio W2/W1 of an opening width W2 of the back-surface groove to the opening width W1 of the front-surface groove may range from 0.6 to 0.9.

The tack welding may be performed by flux cored arc welding (FCAW).

The first arc welding and the second arc welding may each be submerged arc welding (SAW) of a multi-pass.

In S1), grooved ends of N (N is a natural number greater than or equal to 3) thick steel plates may be arranged facing each other to form grooves for N-1 joints, in S2), tack welding may be performed for each joint, in S3), the first arc welding may be performed for each joint, in operation S4), the back-surface grooves may be formed for each joint; and in S5), the second arc welding may be performed for each back-surface groove.

S1) to S5) may be used as unit processes, and the unit processes may be repeatedly performed using a welded product obtained by the unit process as one thick steel plate of S1).

The present disclosure includes a thick steel plate having a heavy unit weight fabricated by the above-described fabrication method of a thick steel plate having a heavy unit weight.

The present disclosure includes a thick steel plate having a heavy unit weight.

According to another aspect of the present disclosure, there is provided a thick steel plate having a heavy unit weight, in which the thick steel plate has a unit weight of 30 tons or more and a thickness of 60 mm or more, and is to be formed into a shape forming at least part of a desired structure, including a weld seam across a thick steel plate in a width direction or a length direction.

In a cross-section in the thickness direction perpendicular to the weld seam of the thick steel plate having a heavy unit weight, the weld seam may include a central region having a first convex region in which the weld bead protrudes bulging toward the base material side, a concave region in which the weld bead is concave, and a second convex region in which the weld bead protrudes bulging toward the base material side, with respect to an imaginary centerline traversing a center of the weld bead in the thickness direction.

Based on the cross-section in the thickness direction perpendicular to the weld seam of the thick steel plate having a heavy unit weight, the weld seam may have a fish scale structure and includes a first region and a second region in which the directions in which the scales cover are opposite, and have a structure in which a part of one region among the first region and the second region is embedded into the other region.

Based on the cross-section in the thickness direction perpendicular to the weld seam of the thick steel plate having a heavy unit weight, the deepest embedded position in the internally embedded region may be denoted as P1, boundary points where the base material meets the first region and the second region may be denoted as P2 and P3, and a length of the perpendicular from P1 to an imaginary line across P2 and P3 may be 0.05 t0 to 0.25 t0.

The thick steel plate having a heavy unit weight, in a formed state where it is roll-milled into an arc shape to form part of a cylinder with a diameter of 6m, may have a Charpy shock absorption energy value of -50°C in the welded portion including the weld seam and a heat-affected zone of the weld being 27J or more.

The thick steel plate having a heavy unit weight may have M weld seams (M is a natural number from 2 to 9) spaced apart and parallel to each other.

The desired structure may be a monopile.

The present disclosure includes a fabrication method of a monopile can.

According to still another aspect of the present disclosure, a fabrication method of a monopile can includes: roll-forming the thick steel plate having a heavy unit weight described above; and fabricating the can by welding the roll-formed thick steel plate having a heavy unit weight.

### Advantageous Effects of Invention

According to an aspect of the present disclosure, a fabrication method of a thick steel plate having a heavy unit weight allows thick steel plates having various unit weights to be easily manufactured by welding thick steel plates to manufacture the thick steel plate having a heavy unit weight.

According to another aspect of the present disclosure, a fabrication method of a thick steel plate having a heavy unit weight may not require the development of a new process or the modification or addition of production facilities in order to manufacture a thick steel plate having a heavy unit weight with a desired unit weight and a desired shape.

According to still another aspect of the present disclosure, a thick steel plate having a heavy unit weight has a unique weld structure, such that even after the thick steel plate is highly formed, the welded portion may have excellent low-temperature impact toughness, and thus may be utilized as a thick steel plate for a monopile.

Various and beneficial advantages and effects in the present disclosure are not limited to the above description, and may be more easily understood in the course of describing the specific example embodiments in the present disclosure.

### Brief Description of Drawings

FIG. 1 is a schematic diagram illustrating an example of a thick steel plate having a heavy unit weight fabricated when the number of thick steel plates to be welded is 2 or 3 in a fabrication method according to a specific example.
FIG. 2 is a detailed process diagram illustrating operation S1) in detail in a fabrication method according to a specific example.
FIG. 3 is a detailed process diagram illustrating operations S4) and S5) in detail in the fabrication method according to a specific example.
FIG. 4 is a schematic diagram illustrating a cross-section in a thickness direction perpendicular to a weld seam of the thick steel plate having a heavy unit weight according to a specific example.
FIG. 5 is another schematic diagram illustrating the cross-section in the thickness direction perpendicular to the weld seam of the thick steel plate having a heavy unit weight according to an example embodiment.
FIG. 6 is an optical photograph of the thick steel plate having a heavy unit weight manufactured according to a specific example.
FIG. 7 is a photograph of a cross-section of a welded portion of the thick steel plate having a heavy unit weight manufactured according to a specific example.
FIG. 8 is an optical photograph of a process of roll-forming the thick steel plate having a heavy unit weight manufactured according to a specific example into an arc shape having a diameter of 6 m or 8 m.

### Mode for Invention

Example embodiments of the present disclosure will be described below with reference to the accompanying drawings. However, the example embodiments of the present disclosure may be modified in many different forms and the scope of the present disclosure should not be limited to the example embodiments set forth herein.

In addition, the example embodiments of the present disclosure are provided to more fully explain the present disclosure to those skilled in the art.

In the accompanying drawings, shapes and dimensions of components may be exaggerated for clarity.

In description of the example embodiments of the present disclosure, well-known technologies are not described in detail not to obscure the description of the present disclosure with unnecessary detail. Further, the following terminologies are defined in consideration of the functions in the present disclosure and may be construed in different ways by the intention of users and operators. Therefore, the definitions thereof should be construed based on the contents throughout the present specification. The terms used in the detailed description is merely for describing the example embodiments of the present disclosure and should in no way be limited. Unless clearly used otherwise, an expression in the singular form includes the meaning of the plural form.

In this description, expressions such as "including" or "comprising" are intended to indicate certain characteristics, numbers, steps, operations, elements, some or combinations thereof, and it should not be interpreted to exclude the existence or possibility of one or more other characteristics, numbers, steps, operations, elements, parts or combinations thereof other than those described.

Unless otherwise specified in the present specification, the unit '%' means weight%.

A case in which any one part is connected with the other part includes a case in which the parts are directly connected with each other and a case in which the parts are indirectly connected with each other with other components interposed therebetween.

Below, the present disclosure will be described in detail through each example embodiment or example of the present disclosure. It should be noted that each example embodiment or example described in this specification is not limited to one example embodiment or example but may also be combined with other example embodiments or examples. Therefore, the citation of claims in the claim is merely an example of an example embodiment and the technical concept of the present disclosure should not be construed as being solely limited to the combination with the cited claim. Combinations with various claims also fall within the scope of the technical concept of the present disclosure.

Terms used in the present disclosure are to describe the present disclosure, and are not intended to limit the present disclosure. In addition, singular forms used herein include the plural forms unless the relevant definition clearly dictates the contrary.

The meaning of "including" as used in the specification specifies a component, and does not exclude the presence or addition of other components.

Unless defined otherwise, all terms including technical terms and scientific terms used herein have the same meaning as commonly understood by a person of ordinary skill in the art to which the present disclosure belongs. The terms defined in the dictionary are interpreted to have a meaning consistent with the related technical literature and the currently disclosed content.

The present disclosure is intended to solve a problem in which, whenever a unit weight of a thick steel plate required in the industry increases, production facilities have to be reconstructed and production conditions have to be developed at an astronomical investment cost.

More specifically, the present disclosure provides a method for producing a thick steel plate having a large unit weight by using a thick steel plate having a unit weight smaller than a desired unit weight.

In addition, the present disclosure provides a method for producing thick steel plates having heavy unit weights of various required unit weights, even when the unit weight of the thick steel plate having a heavy unit weight required in the industry increases or decreases.

A fabrication method of a thick steel plate having a heavy unit weight according to one disclosure is a fabrication method of a thick steel plate having a heavy unit weight, which has a unit weight of 30 tons or more and is to be formed into a shape constituting at least a part of a desired structure.

Specifically, the fabrication method of a thick steel plate having a heavy unit weight includes: S1) using at least two thick steel plates that each have a unit weight of 25 tons or less and a thickness (t0) of 60 mm or more and have a grooved end, and arranging the thick steel plates so that the grooved ends face each other, thereby forming a joint having a groove; S2) performing tack welding to fix the joint; S3) performing first arc welding along the groove; S4) forming a back-surface groove, along the joint, on a back surface opposite a front surface, which is a surface on which the first arc welding is performed; and S5) performing second arc welding along the back-surface groove.

As described above, the fabrication method according to the present disclosure may fabricate a desired thick steel plate having a heavy unit weight by welding thick steel plates having a unit weight smaller than the desired unit weight.

Hereinafter, in order to clearly distinguish between the desired thick steel plate having a heavy unit weight and the thick steel plates used for welding, the thick steel plates used for welding are collectively referred to as "thick plates." In addition, for clarity, among two thick plates whose grooved ends are arranged to face each other to form a single groove, one thick plate is referred to as a "first thick plate," and the other thick plate is referred to as a "second thick plate." However, in the present disclosure, the number of thick plates whose grooved ends are arranged to face each other in operation S1) is not limited to two, and three or more thick plates may be used in operation S1), with the grooved ends of the respective thick plates arranged to face each other. Further, descriptions simply referring to a "thick plate," without limitation to the "first thick plate" or the "second thick plate," may be construed as referring to each of the first thick plate and the second thick plate.

The unit weight of the thick plate may be 25 tons or less, specifically 5 to 25 tons, and more specifically 10 to 25 tons. A thick plate having a unit weight of 5 to 25 tons corresponds to a small- to medium-unit-weight thick plate that is actively produced and sold by most major thick plate fabrication companies, in which production facilities and processes are established.

The thick plate may refer to a steel plate having a thickness of 60 mm or more. In an example embodiment, the thickness of the thick plate may be 60 mm to 200 mm, specifically 60 mm to 150 mm, and more specifically 60 mm to 120 mm. The thick plate (s) to be welded may have the same thickness. The thickness of the thick plate may correspond to the thickness of the thick steel plate having a heavy unit weight to be fabricated.

The unit weight (UWH) of the thick steel plate having a heavy unit weight to be fabricated corresponds to a value obtained by multiplying the unit weight (UWL) of the thick plates being welded by the number (N) of the thick plates (UWH = UWL × N). Accordingly, even if the range of UWH required in the industry varies, a thick steel plate having a heavy unit weight satisfying the required UWH may be fabricated by changing UWL or N, or by changing both UWL and

### N.

The UWH may be 30 tons or more. In consideration of various uses of the thick steel plate having a heavy unit weight, the unit weight (UWH) may be 30 to 150 tons, specifically 30 to 100 tons, and more specifically 30 to 80 tons.

For example, a thick steel plate having a heavy unit weight may be fabricated in which the number of thick plates (N) to be welded is fixed, the unit weight (UWL) of the thick plates to be welded increases, and a required UWH is satisfied. According to an example embodiment, the UWL may be 25 tons or less, specifically 5 to 25 tons, more specifically 10 to 25 tons, and even more specifically 15 to 25 tons.

For example, a thick steel plate having a heavy unit weight may be fabricated in which the unit weight of the thick plates is fixed, the number of thick plates to be welded increases, and a required UWH is satisfied. Accordingly, N may be a natural number of 2 or more without an upper limit. As a practical example considering various uses of the thick steel plate having a heavy unit weight, N may be 10 or less, more practically 6 or less, and even more practically 5, 4, 3, or 2.

In a specific example, N may be 2, and in this case, two thick plates are welded to fabricate the thick steel plate having a heavy unit weight. In another specific example, N may be 3, and in this case, three thick plates are welded to fabricate the thick steel plate having a heavy unit weight.

The shape (that is, the overall shape of the thick steel plate having a heavy unit weight) in which N (where N is a natural number of 2 or more) thick plates are welded may be any shape suitable for an intended use, considering the intended use of the thick steel plate having a heavy unit weight.

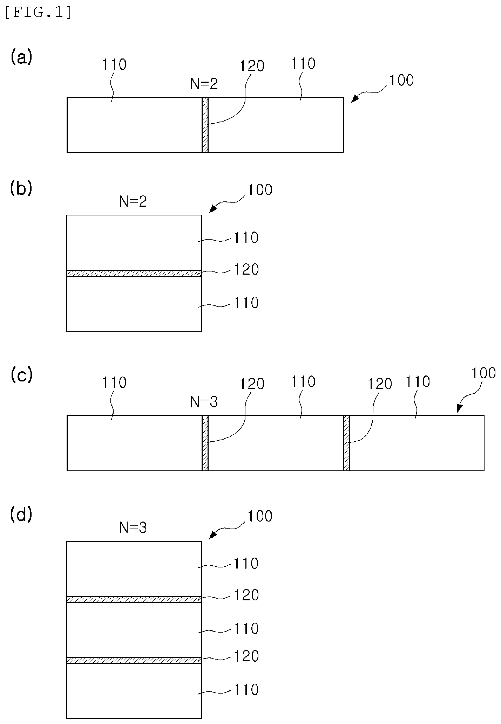

FIG. 1 is a schematic diagram illustrating an example of a thick steel plate having a heavy unit weight fabricated when N is 2 or 3. As shown in an example illustrated in FIG. 1, each thick plate 110 forming the thick steel plate having a heavy unit weight 100 is arranged such that ends thereof face each other in a longitudinal direction or a width direction, and a joint between the thick plates 110 may include a weld seam 120 extending across the thick steel plate having a heavy unit weight in the longitudinal direction or the width direction.

When considering the use of a monopile, a long strip-shaped thick steel plate having a heavy unit weight is required. When considering the use of the monopile, the thick steel plate having a heavy unit weight may be configured such that N thick plates are arranged with their ends facing each other in a longitudinal direction (i.e., arranged such that ends corresponding to a width direction of the thick plates are in contact with each other), and the respective joints may be welded.

According to an example embodiment, when three or more (N) thick plates constitute the thick steel plate having a heavy unit weight, that is, when the thick steel plate having a heavy unit weight includes two or more weld seams (M = N-1), the thick steel plate having a heavy unit weight may be fabricated by the following two methods depending on a size, a weight, and the like of the thick steel plate having a heavy unit weight.

In a first method, three or more (N) thick plates are all arranged together in operation S1), tack welding is performed for each of joints (N-1 joints) in operation S2), first arc welding is performed for each of the joints in operation S3), the back-surface groove is formed for each of the joints in operation S4), and second arc welding is performed for each of the joints in operation S5), thereby fabricating the thick steel plate having a heavy unit weight through a single sequence of operations S1) to S5).

In a second method, operations S1) to S5) are defined as a unit process, and a welded product obtained by the unit process is used as one thick plate in operation S1), such that the unit process is repeatedly performed.

In operation S1) of the first method or through repetition of the unit process in the second method, a thick plate whose ends come into contact with two different thick plates may have grooves formed at each of the contacting ends. That is, a thick plate interposed between two thick plates may have grooves formed at respective ends that come into contact with each of the two thick plates.

However, the present disclosure is not limited to the first method and the second method, and the first method and the second method may be appropriately combined to fabricate the thick steel plate having a heavy unit weight. For example, when fabricating a thick steel plate having a heavy unit weight using five thick plates, as indicated in the first method, a first welded product is fabricated using three thick plates and a second welded product is fabricated using two thick plates, and then, as indicated in the second method, the first welded product and the second welded product are used as the two thick plates in operation S1) to fabricate the thick steel plate having a heavy unit weight.

The fabricated thick steel plate having a heavy unit weight is to be formed into a shape constituting at least a part of a desired structure. This means that, when the thick steel plate having a heavy unit weight is used in each industry, it is formed to suit a corresponding application. The thick steel plate having a heavy unit weight itself is a simple plate shape that has not undergone intentional forming. When considering the use of the monopile, the thick steel plate having a heavy unit weight itself is in the form of a rectangular plate (strip shape) that is long in one direction.

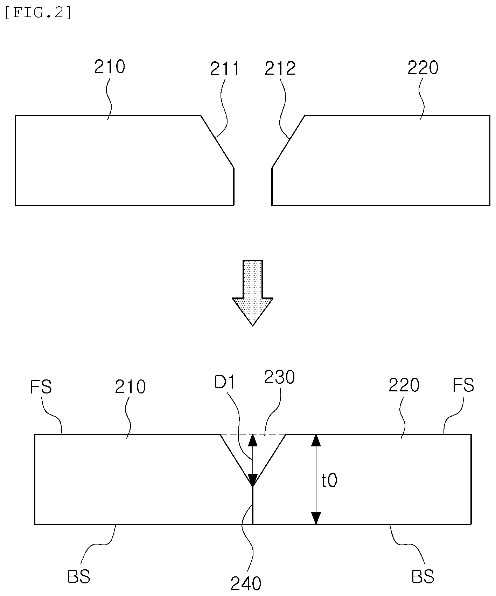

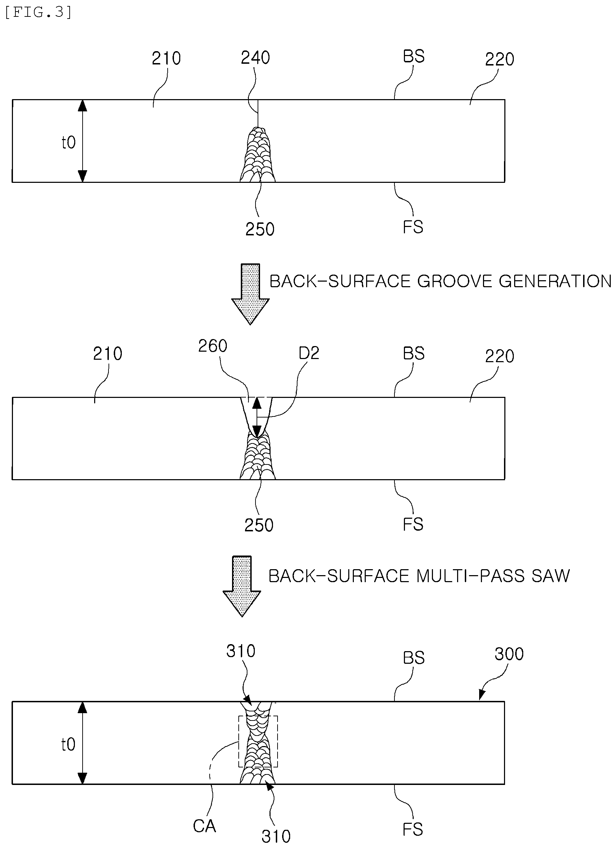

Hereinafter, each of operations S1) to S5) will be described in detail with reference to FIGS. 2 and 3. For clarity of understanding, operations S1) to S5) are described focusing on welding of two thick plates (a first thick plate and a second thick plate), but the number of thick plates used to fabricate the thick steel plate having a heavy unit weight is not limited to two.

Operation S1) is a operation of forming a joint having a groove (hereinafter collectively referred to as a front-surface groove) by arranging grooved ends of thick plate(s) to be welded such that the grooved ends face each other (opposing arrangement). In this case, the joint refers to a region in which two ends are in close contact with each other by the opposing arrangement.

Before the opposing arrangement, grooves may be formed at respective one ends of thick plates to be joined, such that, upon the opposing arrangement, the two grooves are combined with each other to form the front-surface groove. Alternatively, the front-surface groove may be formed along the joint after the opposing arrangement.

FIG. 2 is a detailed process diagram illustrating operation S1) in detail in a fabrication method according to a specific example. FIG. 2 illustrates an example in which, after grooves 211 and 212 are formed at one ends of respective thick plates 210 and 220 to be arranged to face each other for welding, a front-surface groove 230 is formed at a joint 240 by the opposing arrangement. In this case, a surface on which the front-surface groove is located is collectively referred to as a front surface (FS), and a surface opposite to the front surface (FS) is collectively referred to as a back surface (BS).

FIG. 2 illustrates an example in which a V-shaped front-surface groove 230 is formed, but the present disclosure is not limited thereto. The front-surface groove may be V-shaped or U-shaped. A groove of each thick plate may have any shape as long as the front-surface groove having a desired shape may be formed by the opposing arrangement. The groove may be formed by a conventional machining process such as milling or grinding.

After operation S2) is performed, tack welding of operation S3) for fixing the joint (fixing grooves to each other) may be performed, and thereafter, as main welding, first arc welding may be performed along the front-surface groove 230. The tack welding may be flux-cored arc welding

(FCAW), and the first arc welding may be multi-pass submerged arc welding (SAW). The FCAW and multi-pass SAW may be performed using FCAW welding materials and SAW welding materials commonly used for welding thick steel plates having a thickness exceeding 60 mm.

By performing tack welding using the FCAW and performing main welding for the front-surface groove using the multi-pass SAW, a welded portion may have improved mechanical properties.

The tack welding using the FCAW may be performed with a heat input of 0.5 to 2.0 kJ/mm and may be performed continuously (zero gap).

The main welding using the multi-pass SAW may be performed with a heat input (heat input per pass) of 3 to 7 kJ/mm and a welding speed of 0.2 to 2 m/min for 10 to 50 passes, specifically 15 to 40 passes, and more specifically 20 to 35 passes.

FIG. 3 is a detailed process diagram illustrating operations S4) and S5) in detail in the fabrication method according to a specific example.

As illustrated in FIG. 3, after welding of the front-surface groove is performed by first arc welding, for example, the multi-pass SAW, and the front-surface groove is filled with a weld bead 250, a turn-over may be performed by flipping the first thick plate 210 and the second thick plate 220, which are integrated by welding, such that the back surface (BS) is positioned on an upper side and the back surface is exposed.

After flipping the first thick plate 210 and the second thick plate 220 that are integrated, a back-surface groove 260 may be formed along a joint 240 on a back surface (BS). The back-surface groove 260 may also be formed by a conventional machining process such as milling or grinding.

After performing welding on the front-surface groove 230, the back-surface groove 260 may be formed such that the weld bead 250 formed on a front surface (FW) is exposed to a bottom surface of the back-surface groove 260.

After the formation of the back-surface groove 260, second arc welding may be performed along the back-surface groove 260. By performing the second arc welding on the back-surface groove 260, a thick steel plate 300 having a heavy unit weight in which a weld seam 310 extending across the thick steel plate in a width direction or a longitudinal direction is formed may be fabricated.

As described above with reference to FIG. 3, the back-surface groove 260 may be formed such that the weld bead 250 generated by the first arc welding, specifically the multi-pass SAW, is exposed at a bottom surface of the back-surface groove. In order to increase an area of the weld bead 250 exposed at the bottom surface, the back-surface groove 260 may be U-shaped.

The second arc welding of the back-surface groove 260 having a surface at which the weld bead is exposed may be the multi-pass SAW, as illustrated in a detailed process diagram of FIG. 3. The back surface welding using the multi-pass SAW may be performed with a heat input of 3 to 7 kJ/mm, a welding speed of 0.2 to 2 m/min, and 5 to 35 passes, specifically 7 to 25 passes, and more specifically 9 to 20 passes.

In operation S4), the weld bead 250 formed on the front surface (FS) is exposed at the bottom surface of the back-surface groove 260, and in operation S5), the second arc welding, specifically the multi-pass SAW, may be used as the back surface welding. By performing the back surface welding using the multi-pass SAW, the weld bead filling the back-surface groove 260 may be firmly bonded with the weld bead 250 on the front surface, and the welded portion including a finally formed weld seam 310 and a heat-affected zone may have excellent mechanical properties, and in particular, excellent low-temperature impact toughness.

As described above, after performing the front surface welding by the first arc welding, specifically the multi-pass SAW, forming the back-surface groove such that the weld bead on the front surface is exposed, and then performing the back surface welding by the second arc welding, specifically the multi-pass SAW, the thick steel plate having a heavy unit weight satisfying low-temperature impact toughness required for a monopile application may be fabricated.

In one specific example, in order for the welded portion including the weld seam 310 and the heat-affected zone to have a Charpy impact absorption energy value (CVN value) of 27 J or more at -50°C, specifically 50 J or more, more specifically 100 J or more, and even more specifically 150 J or more, which is required for a monopile application, the front-surface groove of operation S1) and the back-surface groove of operation S4) may satisfy Expressions 1 and 2.$D 1 + D 2 > t 0$ (Expresson 1) $0.05 t 0 \leq \left|D1+D2-t0\right| \leq 0.25 t 0$ (Expresson 2)

In Expressions 1 and 2, D1 denotes a groove depth of the front-surface groove, and D2 denotes a groove depth of the back-surface groove.

Expression 1 is a condition in which a sum of the groove depth of the front-surface groove and the groove depth of the back-surface groove is greater than a thickness of a thick plate, and by satisfying Expression 1, the weld bead may be exposed at a bottom surface of the back-surface groove.

Expression 2 is an expression related to an area occupied by the weld bead on a groove surface forming the back-surface groove, that is, a degree to which the weld bead is exposed through the back-surface groove.

A condition of Expression 2 is a condition in which, based on a cross-section (hereinafter, referred to as cross-section of the thick steel plate) in a thickness direction perpendicular to the weld seam of the thick steel plate having a heavy unit weight, the weld seam having a central portion CA may be formed, in which, with respect to an imaginary centerline passing through a center of the weld bead in the thickness direction, a first convex region in which the weld bead protrudes toward a base material side, a concave region in which the weld bead is embedded, and a second convex region in which the weld bead protrudes toward the base material side are sequentially formed from a front surface toward a back surface.

By the weld seam having the central portion CA including the first convex region, the concave region, and the second convex region, even after the thick steel plate having a heavy unit weight is formed into an arc shape through roll forming, the welded portion may not only satisfy low-temperature impact toughness required for a thick steel plate for a monopile, but also may have significantly improved low-temperature impact toughness.

In one specific example, as the weld seam is formed by the multi-pass SAW, the weld seam may have a fish scale structure based on a cross-section in a thickness direction perpendicular to the weld seam of the thick steel plate having a heavy unit weight. In addition, as the multi-pass SAW is performed on a front surface and then turn-over is performed to perform the multi-pass SAW on a back surface, the first convex region and the second convex region may have opposite directions in which scales are formed.

In addition, in one specific example, after welding is performed on the front-surface groove, the back-surface groove is formed to satisfy Expressions 1 and 2, and as the multi-pass SAW is performed on each of the front-surface groove and the back-surface groove, scales belonging to one of the first convex region and the second convex region may have a structure in which the scales are embedded into the other convex region. A degree to which the scales are embedded may be controlled by Expression 2.

While the weld seam has the above-described shape, in terms of securing excellent mechanical properties of the welded portion, |D1 + D2 - t0| may be 0.05 t0 to 0.25 t0, specifically 0.05 t0 to 0.20 t0.

While satisfying Expressions 1 and 2 described above, a groove depth D1 of the front-surface groove 230 may be 0.55 t0 to 0.80 t0, specifically 0.55 t0 to 0.75 t0, and more specifically 0.60 t0 to 0.75 t0. When these conditions are satisfied, the concave region of the weld seam may be located in a region of 0.55 t0 to 0.75 t0 in a thickness direction of the thick steel plate having a heavy unit weight from a front surface.

As described above, according to one specific example, when the thick steel plate having a heavy unit weight is fabricated by performing the multi-pass SAW on the front-surface groove, then forming the back-surface groove such that the weld bead formed by the front surface welding is exposed, and then performing the multi-pass SAW again on the back-surface groove, even after the thick steel plate having a heavy unit weight is formed into an arc shape so as to form a part of a cylinder having a diameter of 6 m, which requires very large forming for a monopile can, the welded portion may have a CVN value of 27 J or more at -50°C, specifically 50 J or more, more specifically 100 J or more, and even more specifically 150 J or more. A practical upper limit of the CVN value may be 200 J, but is not limited thereto.

In addition, in order to have more excellent low-temperature impact toughness (a CVN value at -50°C) after forming of the thick steel plate having a heavy unit weight, while satisfying Expressions 1 and 2 described above, a ratio W1/D1 of an opening width W1 to a groove depth D1 of the front-surface groove 230 may be 0.40 to 0.70, specifically 0.45 to 0.70, and more specifically 0.50 to 0.65. In addition, while satisfying Expressions 1 and 2 described above, a ratio W2/W1 obtained by dividing an opening width W2 of a back-surface groove by an opening width W1 of the front-surface groove may be 0.60 to 0.90, specifically 0.65 to 0.90, and more specifically 0.70 to 0.90.

The thick steel plate having a heavy unit weight may have any composition as long as it exhibits properties suitable for an intended use. For example, when considering a monopile application, the thick steel plate having a heavy unit weight may include, by wt%, C: 0.04 to 0.08%, Si: 0.1 to 0.35%, Mn: 1.4 to 1.8%, Sol.Al (acid-soluble Al): 0.01 to 0.035%, Ni: 0.2 to 0.5%, Cr: 0.1 to 0.3%, Mo: 0.05 to 0.15%, Nb: 0.015 to 0.035%, Ti: 0.005 to 0.02%, N: 0.002 to 0.006%, P: 0.01% or less, S: 0.003% or less, and the balance being iron (Fe) and other unavoidable impurities, but is not necessarily limited thereto. As another example of the thick steel plate having a heavy unit weight applicable to a monopile application, by wt%, the thick steel plate may include C: 0.08% to 0.15%, Mn: 1.70% to 1.85%, Si: 0.2% to 0.4%, Al: 0.005% to 0.015%, Ni: 0.01% to 0.02%, Cr: 0.02% to 0.05%, Cu: 0.04% to 0.08%, Mo: 0.002% to 0.03%, Ti: 0.02% to 0.04%, Nb: 0.002% to 0.004%, N: 50 ppm to 80 ppm, P: greater than 0 ppm and 200 ppm or less, S: greater than 0 ppm and 50 ppm or less, and the balance being iron (Fe) and other unavoidable impurities.

The present disclosure includes the thick steel plate having a heavy unit weight fabricated by the above-described fabrication method of a thick steel plate having a heavy unit weight.

The present disclosure includes a thick steel plate having a heavy unit weight.

According to another aspect of the present disclosure, there is provided a thick steel plate having a heavy unit weight, in which the thick steel plate has a unit weight of 30 tons or more and a thickness of 60 mm or more, and is to be formed into a shape forming at least part of a desired structure, including a weld seam across a thick steel plate in a width direction or a length direction.

The thick steel plate having a heavy unit weight may include a single weld seam extending across the thick steel plate in the width direction or the longitudinal direction, or may include M (where M is a natural number of 2 to 9, specifically 2 to 5, and more specifically 2 to 3) weld seams spaced apart from each other and extending across the thick steel plate in the width direction or the longitudinal direction. In terms of the fabrication method, the thick steel plate having a heavy unit weight including M weld seams spaced apart from each other is fabricated as a single plate by welding N (where N is M+1) thick plates arranged such that ends thereof face each other in a length direction or a width direction.

A unit weight UWH of the thick steel plate having a heavy unit weight may be 30 tons or more, and in consideration of various uses of the thick steel plate having a heavy unit weight, the UWH may be 30 to 150 tons, practically 30 to 100 tons, and more practically 30 to 80 tons.

A thickness t0 of the thick steel plate having a heavy unit weight may be 60 mm to 200 mm, specifically 60 mm to 150 mm, and more specifically 60 mm to 120 mm.

The thick steel plate having a heavy unit weight may be formed into a shape constituting at least a part of a desired structure. That is, the thick steel plate having a heavy unit weight may be in a form of a rectangular plate (strip shape) that is long in one direction and is not formed by mechanical force.

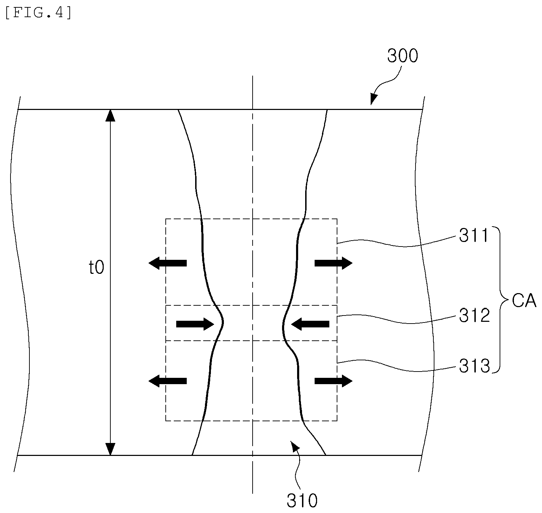

FIG. 4 is a schematic diagram illustrating a cross-section (cross-section of the thick steel plate) in a thickness direction perpendicular to the weld seam 310 of the thick steel plate 300 having a heavy unit weight according to one specific example.

As illustrated in an example of FIG. 4, based on the thick steel plate cross-section, with respect to an imaginary centerline passing through a center of the weld bead in the thickness direction (illustrated by a chain line in FIG. 4), the weld seam may include the central portion CA including a first convex region 311 in which the weld bead protrudes toward a base material side, a concave region 312 in which the weld bead is embedded, and a second convex region 313 in which the weld bead protrudes toward the base material side. In the central portion CA, the first convex region 311, the concave region 312, and the second convex region 313 may be sequentially and continuously arranged in the thickness direction of the thick steel plate 300. In this case, as indicated by arrows in FIG. 4, the protrusion toward the base material side refers to a protrusion in an in-plane direction of a plate with respect to a centerline of the weld seam in the thick steel plate cross-section, and the embedded state of the weld bead refers to a depression in the in-plane direction of the plate with respect to the centerline of the weld seam in the thick steel plate cross-section.

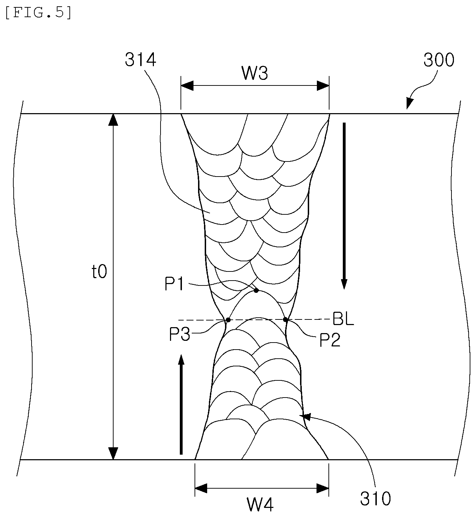

FIG. 5 is another schematic diagram illustrating a cross-section (cross-section of the thick steel plate) in a thickness direction perpendicular to the weld seam 310 of the thick steel plate 300 having a heavy unit weight according to one specific example. As illustrated in an example of FIG. 5, based on the thick steel plate cross-section, the weld seam may have a fish scale structure. In terms of the fabrication method, the fish scale structure may be formed by the multi-pass SAW. The weld bead formed by one pass may form one scale 314 in the cross-section, and as passes proceed, such scales may be layered, thereby forming the fish scale structure in which one scale layer covers a portion of another scale layer.

In addition, the weld seam 310 may include a first region and a second region in which directions in which scales are covered are opposite (as indicated by arrows in FIG. 5), based on the cross-section of the thick steel plate. In this case, the above-described central portion is defined based on a shape at a boundary between the weld seam and a base material, and the first region and the second region are defined based on directions in which the scales are covered. Accordingly, a portion belonging to the first region may also belong to a convex region or a concave region of the central portion.

Among two surfaces (plate surfaces) of the thick steel plate 300, a region having a relatively larger area and having a direction in which scales are covered toward a center of the thick steel plate 300 from one surface is defined as the first region, and a region having a relatively smaller area and having a direction in which scales are covered toward the center of the thick steel plate 300 from the other surface is defined as the second region.

As illustrated in an example of FIG. 5, based on the cross-section of the thick steel plate, the weld seam 310 may have a structure in which a part of the second region is embedded into the first region. Specifically, the scale(s) belonging to the second region may have a structure in which the scale(s) are embedded into the first region.

Based on the cross-section of the thick steel plate, the deepest embedded position in the second region embedded into the first region is defined as P1, and boundary points at which a base material and the first region and the second region meet together are defined as P2 and P3. A length of a perpendicular line at P1 with respect to an imaginary line BL across P2 and P3 may be defined as an embedded depth. The embedded depth may be 0.05 t0 to 0.25 t0, specifically 0.05 t0 to 0.20 t0.

In this case, the first region may include 10 to 50 scales, specifically 15 to 40 scales, and more specifically 20 to 35 scales. The second region may include a smaller number of scales than the first region, and may include 5 to 35 scales, specifically 7 to 25 scales, and more specifically 9 to 20 scales.

Based on the cross-section of the thick steel plate, a ratio W4/W3 of a width W4 of the second region on a surface of the thick steel plate to a width W3 of the first region on the surface of the thick steel plate may be 0.60 to 0.90, specifically 0.65 to 0.90, and more specifically 0.70 to 0.90.

The thick steel plate having a heavy unit weight having the above-described weld seam may have extremely excellent low-temperature impact toughness in the welded portion even after being formed by mechanical force in accordance with an intended use.

The thick steel plate having a heavy unit weight having the above-described weld seam, in a formed state in which the thick steel plate having a heavy unit weight is roll-formed into an arc shape so as to form a part of a cylinder having a diameter of 6 m, may have a Charpy impact absorption energy value (CVN value) of 27 J or more at -50°C in the welded portion including the weld seam and the heat-affected zone.

The present disclosure includes a fabrication method of a monopile can using the thick steel plate having a heavy unit weight described above.

According to an aspect of the present disclosure, the fabrication method of a monopile can includes: roll-forming a thick steel plate having a heavy unit weight described above; and fabricating the can by welding the roll-formed thick steel plate having a heavy unit weight.

A fabrication method of a monopile can according to another disclosure is a fabrication method using the thick steel plate having a heavy unit weight described above, and includes fabricating the thick steel plate having a heavy unit weight; roll-forming the fabricated thick steel plate having a heavy unit weight; and fabricating the can by welding the roll-formed thick steel plate having a heavy unit weight.

In the fabrication method of a monopile can, the roll forming may be performed such that the formed thick steel plate having a heavy unit weight forms a part of a cylinder having a diameter of 6 m to 20 m. In addition, in the fabrication of the can, the roll-formed thick steel plates having a heavy unit weight may be welded to each other, and one roll-formed thick steel plate having a heavy unit weight may be welded to another steel plate.

### (Example 1)

Three thick steel plates each having a unit weight of 25 tons and a thickness of 80 mm were arranged in series such that their ends were in contact with each other while facing each other, and tabs were welded to both ends for fixation. Each end of the thick steel plates arranged opposite each other was groove-machined such that, when the plates are arranged facing each other, a U-shaped groove (front-surface groove) having a groove depth D1 of 50 mm at each joint and a ratio of an opening width W1 to the groove depth D1 of 0.55 is formed.

For each joint, tack welding was performed using FCAW with a heat input of 1.5 kJ/mm, and then main welding was performed using multi-pass SAW. The multi-pass SAW was performed for 25 passes at a heat input of 5 kJ/mm and a welding speed of 1 m/min.

After the main welding, the three integrated thick steel plates were turned over, and U-shaped grooves were formed for each joint. The groove depth of the U-shaped groove (back-surface groove) was 40 mm, and a ratio of an opening width W2 of the back-surface groove to the opening width W1 of the front-surface groove was 0.8. After forming the grooves, welding was performed for each joint using multi-pass SAW. The multi-pass SAW for the back-surface groove was performed for 13 passes at a heat input of 5 kJ/mm and a welding speed of 1 m/min.

After the completion of the welding, the tabs were removed, and surfaces of the welded joints were ground to be smooth.

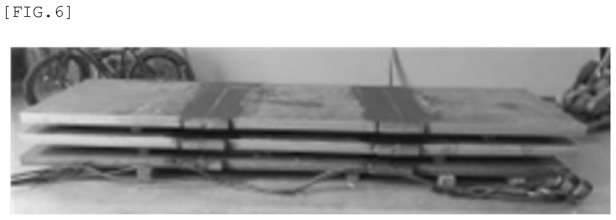

FIG. 6 is an optical photograph of the fabricated thick steel plate having a heavy unit weight, in which a dark gray portion corresponds to the welded joints.

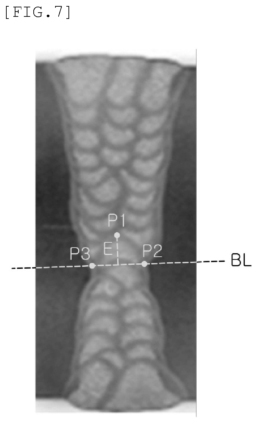

FIG. 7 is a photograph observing a cross-section of a welded portion of the fabricated thick steel plate having a heavy unit weight. It was confirmed that the weld seam had a fish-scale structure formed by the multi-pass SAW and had two regions in which directions of scale overlapping were opposite to each other. Specifically, in FIG. 7, a region in which scales overlap from an upper side toward a center of the steel plate is a region (a first region) in which an upper groove is filled with weld beads, and a region in which scales overlap from a lower side toward the center of the steel plate is a region (a second region) in which a lower groove is filled with weld beads. In FIG. 7, a deepest point in a portion where the second region is embedded into the first region is denoted as P1, and points at which the base material (steel) and the first region and the second region meet together are denoted as P2 and P3. Thereafter, a length of a perpendicular from P1 to a straight line passing through P2 and P3 was measured, and the length of the perpendicular line (embedded depth) was about 6 mm. Since the groove depth of the front-surface groove is 50 mm and the groove depth of the back-surface groove is 40 mm, a depth by which the second region is embedded into the first region reaches 10 mm; however, when measuring the embedded depth using a cross-sectional photograph, P2 and P3 were used, and thus the embedded depth calculated as the length of the perpendicular line was measured to be smaller than an actual depth. In addition, as the back-surface groove is formed such that the first region is exposed to a surface, it may be confirmed in FIG. 7 that a concave region in which a weld bead is embedded is formed in the vicinity of P2 and P3, and convex regions protruding toward the base material are formed on both sides with the concave region as a center.

### (Example 2)

A thick steel plate having a heavy unit weight was fabricated in the same manner as in Example 1, except that the groove depth of the back-surface groove was 31 mm and the multi-pass SAW for the back-surface groove was performed for 9 passes.

### (Example 3)

A thick steel plate having a heavy unit weight was fabricated in the same manner as in Example 1, except that the groove depth of the back-surface groove was 35 mm and the multi-pass SAW for the back-surface groove was performed for 11 passes.

### (Example 4)

A thick steel plate having a heavy unit weight was fabricated in the same manner as in Example 1, except that the groove depth of the back-surface groove was 45 mm and the multi-pass SAW for the back-surface groove was performed for 15 passes.

### (Example 5)

A thick steel plate having a heavy unit weight was fabricated in the same manner as in Example 1, except that the groove depth of the back-surface groove was 50 mm and the multi-pass SAW for the back-surface groove was performed for 18 passes.

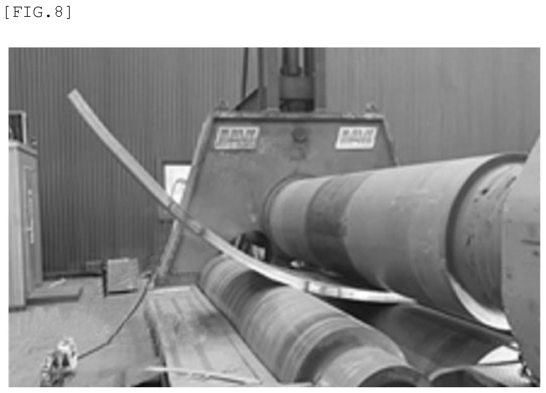

The fabricated thick steel plate having a heavy unit weight was roll-formed into an arc shape having a diameter of 6 m or 8 m (see FIG. 8), and after forming, an impact test was performed at -50°C on a welded portion including a weld seam and a heat-affected zone. Specifically, JIS No. 4 test specimens were taken in a rolling direction at 1/4 t0, 1/2 t0, and 3/4 t0 locations in a thickness t0 direction of the roll-formed thick steel plate having a heavy unit weight, and impact tests were performed at -50°C to measure CVN values. The impact test was performed three times at each location, and CVN values measured at each location were averaged.

As a result of measurement, it was confirmed that all test specimens exceeded low-temperature CVN values required for monopile applications. Specifically, the thick steel plates having a heavy unit weight fabricated in Examples 1, 3, and 4 had CVN values of welded portions of 170 J or higher at -50°C even in a state of being roll-formed into an arc shape having a diameter of 6 m, and the thick steel plate having a heavy unit weight fabricated in Example 2 had a CVN value of a welded portion at a level of 50 J at -50°C in a state of being roll-formed into an arc shape having a diameter of 6 m. In a case of the thick steel plate having a heavy unit weight fabricated in Example 5, a CVN value of a welded portion was at a level of 120 J at -50°C in a state of being roll-formed into an arc shape having a diameter of 6 m.

While example embodiments have been shown and described above, it will be apparent to those skilled in the art that modifications and variations could be made without departing from the scope of the present disclosure as defined by the appended claims.

## Claims

1. A fabrication method of a thick steel plate having a heavy unit weight, in which the thick steel plate has a unit weight of 30 tons or more and is to be formed into a shape forming at least part of a desired structure, the fabrication method comprising:
S1) using at least two thick steel plates that each have a unit weight of 25 tons or less and a thickness (t0) of 60 mm or more and have a grooved end, and arranging the thick steel plates so that the grooved ends face each other, thereby forming a joint having a groove;
S2) performing tack welding to fix the joint;
S3) performing first arc welding along the groove;
S4) forming a back-surface groove, along the joint, on a back surface opposite a front surface, which is a surface on which the first arc welding is performed; and
S5) performing second arc welding along the back-surface groove.

2. The fabrication method of claim 1, wherein a weld bead generated by the first arc welding is exposed to a bottom surface of the back-surface groove formed in S4.

3. The fabrication method of claim 1, wherein the groove of S1) is the front-surface groove, and the back-surface groove formed in S4) satisfies Expressions 1 and 2. $D 1 + D 2 > t 0$ (Expresson 1) $0.05 t 0 \leq \left|D1+D2-t0\right| \leq 0.25 t 0$ (Expresson 2) where D1 denotes a groove depth of the front-surface groove, and D2 denotes a groove depth of the back-surface groove.

4. The fabrication method of claim 3, wherein the groove depth (D1) of the front-surface groove ranges from 0.55 t0 to 0.80 t0.

5. The fabrication method of claim 2, wherein the groove of S1) is a front-surface groove, the front-surface groove is U-shaped or V-shaped, and the back-surface groove is U-shaped.

6. The fabrication method of claim 3, wherein an opening width (W1)/groove depth (D1) of the front-surface groove ranges from 0.4 to 0.7.

7. The fabrication method of claim 3, wherein a ratio (W2/W1) of an opening width W2 of the back-surface groove to the opening width (W1) of the front-surface groove ranges from 0.6 to 0.9.

8. The fabrication method of claim 1, wherein the tack welding is performed by flux cored arc welding (FCAW).

9. The fabrication method of claim 8, wherein the first arc welding and the second arc welding are each submerged arc welding (SAW) of a multi-pass.

10. The fabrication method of claim 1, wherein, in S1), grooved ends of N (N is a natural number greater than or equal to 3) thick steel plates are arranged facing each other to form grooves for N-1 joints, in S2), tack welding is performed for each joint, in S3), the first arc welding is performed for each joint, in operation S4), the back-surface grooves are formed for each joint; and in S5), the second arc welding is performed for each back-surface groove.

11. The fabrication method of claim 1, wherein S1) to S5) are used as unit processes, and the unit processes are repeatedly performed using a welded product obtained by the unit process as one thick steel plate of S1).

12. A thick steel plate having a heavy unit weight, in which the thick steel plate has a unit weight of 50 tons or more and a thickness of 60 mm or more, and is to be formed into a shape forming at least part of a desired structure, the thick steel plate comprising:
a weld seam across a thick steel plate in a width direction or a length direction.

13. The thick steel plate having a heavy unit weight of claim 12, wherein, in a cross-section in the thickness direction perpendicular to the weld seam of the thick steel plate having a heavy unit weight, the weld seam includes a central portion having a first convex region in which the weld bead protrudes bulging toward the base material side, a concave region in which the weld bead is concave, and a second convex region in which the weld bead protrudes bulging toward the base material side, with respect to an imaginary centerline traversing a center of the weld bead in the thickness direction.

14. The thick steel plate having a heavy unit weight of claim 12, wherein, based on the cross-section in the thickness direction perpendicular to the weld seam of the thick steel plate having a heavy unit weight, the weld seam has a fish scale structure and includes a first region and a second region in which the directions in which the scales cover are opposite, and has a structure in which a part of one region among the first region and the second region is embedded into the other region.

15. The thick steel plate having a heavy unit weight of claim 14, wherein, based on the cross-section in the thickness direction perpendicular to the weld seam of the thick steel plate having a heavy unit weight, the deepest embedded position in the internally embedded region is denoted as P1, boundary points where the base material meets the first region and the second region are denoted as P2 and P3, and a length of a perpendicular line from P1 to an imaginary line across P2 and P3 is 0.05 t0 to 0.25 t0.

16. The thick steel plate having a heavy unit weight of claim 15, wherein the thick steel plate having a heavy unit weight, in a formed state where it is roll-milled into an arc shape to form part of a cylinder with a diameter of 6m, has a Charpy shock absorption energy value of -50°C in the welded portion including the weld seam and a heat-affected zone of the weld being 27J or more.

17. The thick steel plate having a heavy unit weight of claim 12, wherein the thick steel plate having a heavy unit weight has M weld seams (M is a natural number from 2 to 9) spaced apart and parallel to each other.

18. The thick steel plate having a heavy unit weight of claim 12, wherein the desired structure is a monopile.

19. A fabrication method of a monopile can, comprising: roll-forming the thick steel plate having a heavy unit weight according to any one of claims 12 to 17; and fabricating the can by welding the roll-formed thick steel plate having a heavy unit weight.
